# EUROPEAN PATENT SPECIFICATION

(11) **EP 0 644 515 B1**
(45) Date of publication and mention of the grant of the patent: **03.02.1999**
(21) Application number: 93114867.0
(22) Date of filing: 15.09.1993
(51) Int. Cl.: G08G 1/017, G08G 1/127, G07C 9/00, G06K 7/08

(54) **A transponder system**
Ein Transpondersystem
Un système de répondeur

(43) Date of publication of application: 22.03.1995
(73) Proprietor: TEXAS INSTRUMENTS DEUTSCHLAND GMBH, 85356 Freising (DE)
(72) Inventor: Schuermann, Josef, 85416 Langenbach-Oberhummel (DE)
(74) Representative: Schwepfinger, Karl-Heinz, Dipl.-Ing.

(56) References cited:
- EP-A- 0 252 773
- GB-A- 2 169 173

## Description

The invention relates to a transponder system for the wireless transmission of data logged in a vehicle to an interrogation station, comprising a battery powered transponder installed in the vehicle and having a memory for the logged data and an identifying code allotted to the vehicle, the battery powered transponder being adapted, in response to an interrogating pulse transmitted by an interrogating device at the base station, to transmit, to the interrogating device, the identifying code and the data for the reception and processing thereof.

Such a system is known from GB-A- 2 169 173.

In vehicles, such as for instance trucks, transponder systems are employed which are able to store vehicle-relevant data and when required transmit the same wirelessly to a base station. Such stored data may for example relate to the respective route used and the idle times of the vehicle or it may be a question of data entered by the driver using a keyboard and consisting, for example, of details relating to the quantity of fuel supplied, details concerning the destination and the load on the truck. At the home depot the data stored in the transponder can be recalled wirelessly with the aid of an interrogating device, the latter transmitting an interrogation pulse, which causes the return transmission of the stored data. In order to render possible allocation of the data to the vehicle, the transponder also contains a stored identifying code, which is unequivocally associated with the vehicle.

The fact that the identifying code of the respective vehicle is stored in the transponder may be employed for other purposes than the association of the transmitted data with the respective vehicle. The identifying code transmitted with the data might for example be employed for checking the access right so that for instance it would be possible to ensure that only authorized vehicles would be allowed to enter a company area. Furthermore it would be possible to ensure that only authorized vehicles could receive fuel at a company fuel station. In this case the interrogation device would, after receiving and checking the identifying code, transfer an access authorization to a control unit, which would then be able to perform the required function (for example, opening of a gate or enablement of a fuel pump).

The transponder installed in the vehicle is normally supplied with power from the vehicle's battery. This means that its identifying code and the data stored in the transponder is not able to be recalled if the vehicle's battery is run down or the supply of power is interrupted by other effects. More specifically, the particularly important transmission of the identifying code will then not be possible.

With the aid of the invention a transponder system of the type initially mentioned is to be so improved that even on failure of the power supply it may be interrogated, at least to recall the identifying code therefrom.

In accordance with the invention this object is achieved by a battery-less transponder installed in the vicinity of the battery powered transponder, in which battery-less transponder at least an identifying code also specific to the vehicle is stored, said battery-less transponder being adapted to transmit to the interrogating device at least this identifying code in response to receiving the interrogating pulse.

Owing to the addition of the battery-less transponder, in which an identifying code specific to the vehicle is additionally stored as in the battery powered transponder, it is possible to recall the identifying code even if the power supply of the battery powered transponder has failed so that the vehicle may be identified in this case as well.

Preferably the identifying codes stored in the two transponders are the same.

In accordance with a further advantageous development of the invention the battery powered transponder is so controlled that it partly or completely transmits the data stored in its memory at regular time intervals, the battery-less transponder comprises a data memory into which it places the data transmitted by the battery powered transponder and the battery-less transponder transmits the data stored in it in addition to the identifying code.

In this further development of the invention the battery-less transponder contains in addition to the identifying code at least a part of the data logged in the battery powered transponder so that in addition to the identifying code it is furthermore possible to transmit such data to the interrogating device following failure of the battery powered transponder.

The invention will now be explained with reference to the drawing by way of example only.
- Figure 1: is a diagrammatic block circuit diagram of the transponder system in accordance with the invention.
- Figure 2: is a more detailed circuit diagram of the battery powered transponder and of the battery-less transponder associated with it.

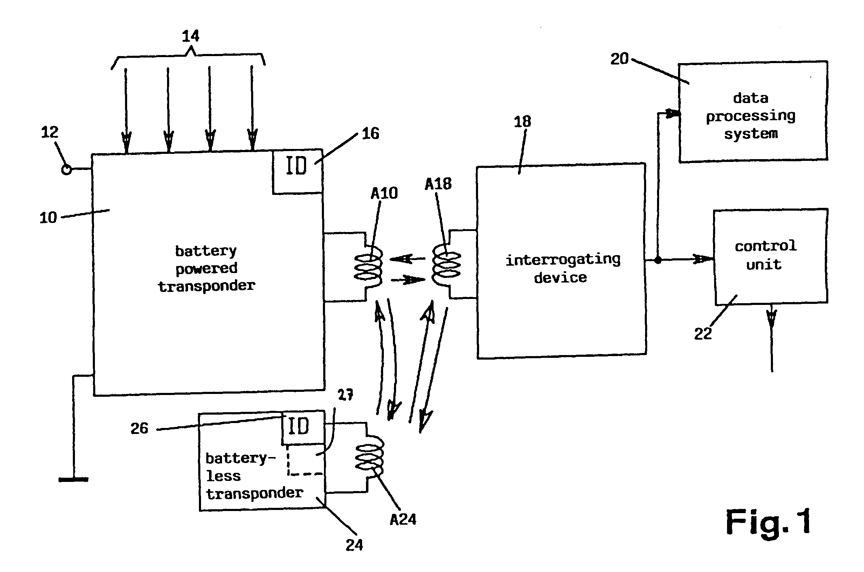

The transponder system depicted in figure 1 comprises a battery powered transponder 10, which is accommodated in a truck and via a terminal 12 is supplied with the battery power of the truck. The battery powered transponder 10 has a plurality of inputs 14, which are connected with sensors (not illustrated) so that vehicle-specific data may be detected in the truck and logged in the transponder. One function of the battery powered transponder may for example be that of an electronic speedograph or recording speedometer, one of the sensors in this case being connected with the speedometer of the truck so that data in relation to the respective travel parameters of the truck may be recorded. Furthermore it is possible for other data to be fed to the transponder 10 through the inputs 14 and logged in the transponder 10, such data being for example data in relation to destinations, the loads carried and the like. Input of such data is by the driver using a keyboard.

The battery powered transponder 10 contains its own memory 16 in which an identifying code ID is stored which is unequivocally associated with or allotted to the transponder 10 and the vehicle as well, which is fitted with the transponder 10.

The data, which are stored in the transponder 10, may be recalled with the aid of an interrogating device 18 from the transponder 10 and transmitted to a data processing system 20. If appropriate it is possible for the data to be also processed in a control unit 22 in order to perform necessary control functions in a fashion dependent on the recalled data. The interrogating device 18 can be located, for instance, in the base depot of the truck so that every time the truck with the transponder 10 returns to the base depot the data which have been logged in the meantime can be recalled and processed in the data processing system 20.

In order to cause transmission of the data logged in the battery powered transponder 10 the interrogating device 18 transmits an RF interrogating pulse via the antenna A18 marked as a coil. This RF interrogating pulse is transmitted using the antenna A10 marked as a coil from the battery powered transponder 10 and received via the antenna A24, also illustrated in form of a coil, by the battery-less transponder 24. In the battery-less transponder 24 the interrogation pulse causes transmission of the identifying code ID and in the battery powered transponder 10 the RF interrogation pulse causes both the transmission of the identifying code ID and also the data logged in this transponder.

In order for the recalled data to be able to be unequivocally associated with the respective truck, the interrogating device 18 receives, together with the recalled data, furthermore the identifying code stored in the memory part 16 specifically provided therefor, from the battery powered transponder 10. This identifying code is transmitted together with the data to the data processing system 20 so that it is always possible to establish an unequivocal connection between the data and the respective truck. The identifying code ID may however be employed for other purposes. For instance it is possible for the control unit 22 to be installed in a fuel station at the base depot of the truck and it may be so designed that it only permits filling the tank of the truck in question after it has received the respective identifying code via the interrogating device 18. For instance it would be possible to arrange for the control unit 22 to only enable the filling of 100 liters of fuel after receiving a certain identifying code, whereas in the case of other identifying codes it would permit the supply of larger or smaller quantities of fuel. Simultaneously because the identifying code and therefore the respective vehicle is known, it would be feasible to make a detailed record of the quantities of fuel and the truck receiving them.

A further possibility of using the identifying code in connection with the control unit 22 might be such that the control unit 22 would have an associated gate, which is arranged at the entry to a warehouse for the goods to be transported. By processing the identifying code it would be possible to ensure that only trucks with certain identifying codes would be allowed to enter certain restricted areas through the gate.

From the above description it will be clear that an important point in connection with the use of a battery powered transponder 10 is that together with the data logged therein it is furthermore possible for the identifying code ID stored in the part 16 to be transmitted to the interrogating device 18. Without receiving the identifying code in the interrogating device 18 the unequivocal association between the respective truck and the data would be lost. If the possibilities of the control unit 22 are taken advantage of, it is not possible to perform the desired functions in the absence of the identifying code ID. If the power supply in the truck, in which the battery powered transponder 10 is installed, should fail, it would not be possible to recall the identifying code ID so that the desired control functions could not be performed either. Naturally it would not be possible in such a case to perform any data transmission between the battery powered transponder 10 and the interrogating device 18.

In order to overcome these difficulties an additional transponder 24 is installed in the truck, which is however so designed that it may operate without any power supply. In this battery-less transponder 24 the same identifying code ID is stored in a specific storage part 26 thereof. However, it would be feasible as well to store a different identifying code in this transponder 24, which code would however have to be clearly associated with the vehicle. This battery-less transponder may be as described and depicted in the European patent application EP-A-0 301 127. The detailed structure of the interrogating device 18 may also be as in the said European patent application.

The particular feature of the battery-less transponder 24 is that it does not have its own energy supply and in fact the energy necessary for it to transmit the identifying code ID is produced from the RF interrogating pulse, which is always transmitted by the interrogating device 18, when it is to interrogate a transponder. As described in said European patent application the battery-less transponder 24 always transmits the identifying code ID stored in it, when it detects the end of the RF interrogating pulse, transmitted by the interrogating device 18 and when the charge voltage produced by rectification of the received RF interrogating pulse at a capacitor has achieved a sufficiently high value.

In the transponder system depicted in figure 1 the interrogating device 18 consequently receives the identifying code ID twice over, namely firstly from the battery-less transponder 24 and then from the battery powered transponder 10. This double reception leads to enhanced reliability for the recognition of the vehicle, in which the transponder system is installed. Furthermore an identifying code ID will even be received if the power supply in the respective vehicle has failed or has dropped to such a low level that the battery powered transponder 10 no longer operates satisfactorily. Accordingly it is always possible to perform control functions which are a precondition to receiving the identifying code ID. For instance it would always be possible for a vehicle to receive fuel at a fuel station, which is under the control of the control unit 22 as described above, even if the battery powered transponder 10 has failed.

The transmission operation of the battery powered transponder 10 does however have to be delayed for a certain period of time in order for it to be possible for the interrogating device 18 to firstly receive the identifying code ID of the battery-less transponder 24 prior to its receiving the information transmitted by the battery-less transponder 10.

The cooperation of the interrogating device 18 with the battery-less transponder 24 is described in detail in the European patent application EP-A-0 301 127.

In accordance with a further embodiment of the invention the battery-less transponder may possess a data memory 27, in which all or only a part of the data stored in the battery powered transponder 10 may be stored. The transmission of the data may then take place wirelessly at regular intervals of time by transmission of the data by the battery powered transponder 10 in such regular intervals as if it were being interrogated by an interrogation device 18. The data transmitted via the antenna A10 are in this case received by the antenna A24 of the battery-less transponder and stored in the storage means thereof. This arrangement offers the advantage that following failure of the battery powered transponder 10 the interrogation device 18 not only recalls the identifying code ID of the respective vehicle but furthermore data may be received which are stored in the battery-less transponder 24. This constitutes a distinct improvement as regards reliability preventing loss of the data stored in the battery powered transponder 10.

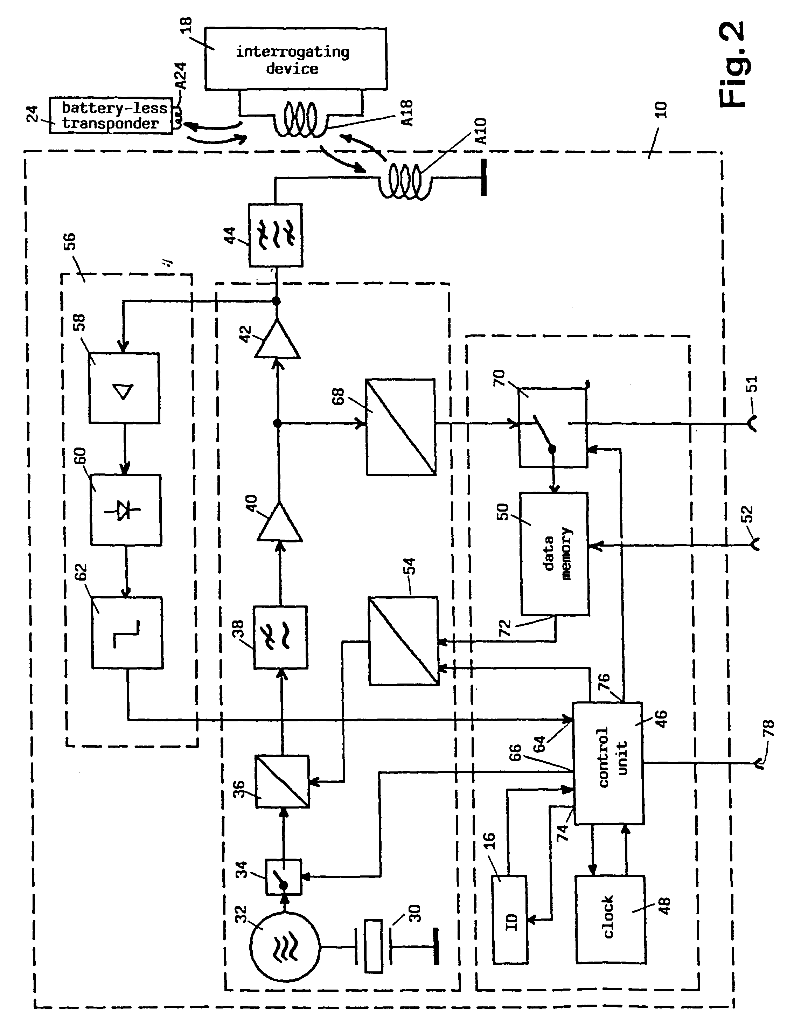

An example for the design of the battery powered transponder 10 is illustrated in figure 2.

The block circuit diagram depicted in figure 2 of the battery powered transponder 10 is only provided as one possible example of such a transponder.

The transponder 10 depicted in figure 2 comprises an oscillator 32 controlled by a quartz 30 for the production of the operating frequency. The input signal of the oscillator 32 with the frequency f1 is supplied via a controlled switch 34, a frequency divider 36 with a controlled division ratio, a band filter 38, an amplifier 40, a further amplifier 42 and a further filter 44 to the antenna coil A10.

The operation of the transponder 10 is controlled by a control unit 46, which for its part is under the control of a clock 48 and supplies signals at its outputs, which control the course of operation of the transponder 10. The memory 16 for the identifying code ID is also connected with the control unit 46 so that such code may be transmitted together with data stored in a data memory 50 by the transponder 10. The input of data into the data memory 50 is performed via an input 52 which is representative for the inputs 14 of figure 1, such input 52 being connected with external sensors. The data contained in the data memory 50 are supplied via a modulator 54 to the frequency divider 36 so that FSK modulation, dependent on the data, is achieved by data-controlled switching of the division ratio of the frequency divider 36.

The reception of an interrogating pulse, which is transmitted by the interrogating device 18 via its antenna A18 and is received by the antenna A10 is detected with the aid of a circuit part 56, which taps the received interrogating pulse at the filter 44 and via an amplifier 58, a rectifier 60 and an pulse shaper 62 supplies it to the control unit.

The components of the transponder 10 depicted in figure 2 are supplied with power by the battery of the vehicle, in which the transponder 10 is installed. The respective supply lines are omitted from figure 2 In order to make the drawing more straightforward.

The manner of operation of the transponder 10 in connection with the interrogating device 18 and the battery-less transponder 24 is as follows:

Firstly let it be assumed that the transponder 10 is installed in a vehicle, which is equipped with sensors whose output signals are to be logged or stored in the data memory 50. Such logging of the vehicle-relevant data is performed in a customary fashion so that no more detailed description thereof is required here. As soon as the transponder 10 receives an RF interrogating pulse (transmitted by the interrogating device 18) at its antenna A10, such pulse will pass through the filter 44, the amplifier 58, the rectifier 60 and the pulse shaper 62 to the control unit 46. Here it will initiate a timed sequence of events in succession, because the control unit 46 will send control signals in sequence and in the fashion now to be described in the following, to the components of the transponder 10. The clock 48 will in this respect supply the basic timing signal, with which the provision of control signals by the control unit 46 takes place.

Immediately following the reception of the processed RF control pulse at the input 64 of the control unit 46 the latter will set a delay time period, in which initially no activity will be caused to take place. In this delay time period the battery-less transponder 24 will have an opportunity, after the termination of the interrogating pulse, also received via its antenna A24, to transmit the identifying code stored by it. Since the battery-less transponder 24 transmits with a relatively power, a premature start of transmission of the more powerful transponder 10 would render impossible reception of the identifying code transmitted by the battery-less transponder 24.

After the delay period has run to an end, the control unit 46 will supply a pulse at its output 66 which causes the turning off of the switch 34. As a result the RF signals of the oscillator 32 arrived at the controlled frequency divider 36, which in this stage is operating with a basic dividing ratio. This basic dividing ratio is due to the fact that the frequency f1 of the oscillator 32 is divided by the division factor of n1.

Following this at its output 74 the control unit 46 supplies a control signal to the memory 16 for the identifying code ID so that the latter is caused to apply such code via the control unit 46 to a modulator 54, which modifies the dividing ratio of the controlled frequency divider 36 in a fashion dependent on the data between two values. In this respect there may be a provision for a data value of 0 in the identifying code to cause the modulator 54 to set the division ratio of f1/n1 at the frequency divider 36, whereas a bit with the value of 1 will lead to setting to another division ratio with the value of f1/n2.

This means that, dependent on the data value of the individual bits of the identifying code the frequency at the output of the frequency divider 36 will have the value of F1 = f1/n1 or F2 = f1/n2. The signals transmitted from the antenna A10 will consequently have FSK modulation.

Once the identifying code ID has been completely transmitted, the control unit 46 will, at its output 76, supply a signal, which so sets the switch 70 that the data memory 50 will receive shift signals via the frequency divider 68, such signals causing the data stored in the data memory 50 to be applied, via the modulator 54, to the controlled frequency divider 36. The data arriving at the frequency divider 36 will then, by switching the division ratio of the frequency divider 36, be responsible for the production of the same FSK modulation of the signals transmitted from the antenna A10 as the previously applied identifying code ID.

If no data are transmitted, and the data memory 50, via the input 53, receives data from a sensor, the switch 70 will assume its other position of switching, in which it receives the clock signals at the data store 50 coming from an input 51, which signals are only required in storing operation of the data memory 50.

The interrogating device 18 is consequently able to receive in sequence the identifying code from the battery-less transponder 24, then the identifying code from the battery powered transponder 10 and the data following the same from the data memory 50.

If the battery-less transponder 24 is so designed that it possesses a data memory, it is possible for the control unit 46 to be caused by the clock 48 to transmit, at regular intervals in time, the data signals stored in the data memory 50, completely or in part, in such a manner via the antenna A10 as if the interrogating device 18 had transmitted an interrogating pulse. Owing to the proximity in space of the battery powered transponder 10 and the battery-less transponder 24 it is possible for the data thus to be taken over in the memory of the battery-less transponder 24 so that following any failure of the power supply of the battery powered transponder 10 the interrogating device 18 would be able to receive the data from the battery-less transponder 24.

In order to ensure that the battery powered transponder 10 is able to cooperate with the battery-less transponder 24, it is necessary for the oscillator 32 and the frequency divider 36 to be so dimensioned that the same frequencies are transmitted by the antenna A10 of the battery powered transponder 10 as those with which the battery-less transponder 24 as described in the said already mentioned European patent application, operates. As an example let it be assumed that the input frequency f1 of the oscillator 32 amounts to 1.61. MHz. The frequency divider 36 is so set that it is able to divide its input frequency by n1 equal to 12 or n2 equal to 13. The two frequencies, between which the signal, transmitted from the antenna A10, switches owing to the FSK modulation, thus amounts to 134.2 kHz and 123.8 kHz. The frequency divider 68 is so set that the shift rate with which the data from the data memory 50 are shifted to the modulator 54 switches between the frequencies of 8.38 kHz and 7.73 kHz. It is in this manner that the system ensures that the shift rate is changed in a fashion dependent on the data and while taking into account the respective associated FSK frequency.

In order to ensure that the interrogating device 18 is able to completely receive the identifying code ID from the battery-less transponder 24 prior to start of the transmission of the same code and the following data by the battery powered transponder 10, the control unit 46 produces a delay time (t) of 150 ms. between the reception of the RF interrogating pulse and the start of transmission at the already mentioned frequency values.

## Claims

1. A transponder system for the wireless transmission of data logged in a vehicle to an interrogation station, comprising a battery powered transponder (10) installed in the vehicle and having a memory (50) for the logged data and an identifying code (ID) allotted to the vehicle, the battery powered transponder (10) being adapted, in response to an interrogating pulse transmitted by an interrogating device (18) at the base station, to transmit, to the interrogating device (18), the identifying code and the data for the reception and processing thereof, characterized in that a battery-less transponder (24) is installed in the vicinity of the battery powered transponder (10), in which battery-less transponder at least an identifying code (ID) also specific to the vehicle is stored, said battery-less transponder being adapted to transmit to the interrogating device (18) at least this identifying code (ID) in response to receiving the interrogating pulse.

2. The transponder system as defined in claim 1, characterized in that the identifying code (ID) stored in the battery-less transponder (24) is the same as the identifying code (ID) stored in the battery powered transponder (10).

3. The transponder system as defined in claim 1 or in claim 2, characterized in the battery powered transponder (10) is so driven that it transmits the data comprised in its memory (50) completely or in part at regular intervals of time, that the battery-less transponder (24) contains a data memory (27), in which it accepts the data transmitted by the battery powered transponder (10) and that the battery-less transponder (24), together with the identifying code (ID) also transmits the data stored in it.

4. The transponder system as defined in claim 1, claim 2 or claim 3, characterized in that a control unit (22) is provided at the base station, such control unit only enabling the control functions when the interrogating device (18) has, in response to the transmission of the interrogating pulse, received the identifying code (ID) and has determined same to be valid.

## Patentansprüche

1. Transpondersystem zum drahtlosen Übertragen von in einem Fahrzeug erfaßten Daten zu einer Abfragestation, mit einem in dem Fahrzeug angebrachten batteriegespeisten Transponder (10), der einen Speicher (50) für die erfaßten Daten und für einen dem Fahrzeug zugeordneten Identifizierungscode (ID) enthält, wobei der batteriegespeiste Transponder (10) als Antwort auf einen von einem Abfragegerät (18) an der Basisstation ausgesendeten Abfrageimpuls den Identifizierungscode und die Daten zu deren Empfang und Verwertung zu dem Abfragegerät (18) sendet, dadurch gekennzeichnet, daß in räumlicher Nähe zu dem batteriegespeisten Transponder (10) ein batterieloser Transponder (24) angebracht ist, in dem zumindest ein ebenfalls dem Fahrzeug zugeordneter Identifizierungscode (ID) gespeichert ist und der als Reaktion auf den Empfang des Abfrageimpulses wenigstens diesen Identifizierungscode (ID) zu dem Abfragegerät (18) sendet.

2. Transpondersystem nach Anspruch 1, dadurch gekennzeichnet, daß der in dem batterielosen Transponder (24) gespeicherte Identifizierungscode (ID) der gleiche wie der im batteriegespeisten Transponder (10) gespeicherte Identifizierungscode (ID) ist.

3. Transpondersystem nach Anspruch 1 oder 2, dadurch gekennzeichnet, daß der batteriegespeiste Transponder (10) derart gesteuert ist, daß er die in seinem Speicher (50) enthaltenen Daten ganz oder teilweise in regelmäßigen Zeitabständen aussendet, daß der batterielose Transponder (24) einen Datenspeicher (27) enthält, in dem er die vom batteriegespeisten Transponder (10) ausgesendeten Daten übernimmt, und daß der batterielose Transponder (24) mit dem Identifizierungscode (ID) auch die in ihm gespeicherten Daten aussendet.

4. Transpondersystem nach Anspruch 1, 2 oder 3, dadurch gekennzeichnet, daß an der Basisstation eine Steuereinheit (22) vorgesehen ist, die die Steuerfunktionen nur dann freigibt, wenn das Abfragegerät (18) als Reaktion auf das Aussenden des Abfrageimpulses den Identifizierungscode (ID) empfangen und als gültig ausgewertet hat.

## Revendications

1. Système à répondeur pour une transmission sans fil de données logé dans un véhicule vers une station d'interrogation, comprenant un répondeur (10) alimenté par batterie, installé dans le véhicule et ayant une mémoire (50) pour les données enregistrées et un code d'identification (ID) alloué au véhicule, le répondeur (10) alimenté par batterie étant adapté, en réponse à une impulsion d'interrogation transmise par un dispositif d'interrogation (18) à la station de base, pour transmettre, au dispositif d'interrogation (18), le code d'identification et les données pour la réception et leur traitement, caractérisé en ce qu'un répondeur (24) sans batterie est installé à proximité du répondeur (10) alimenté par batterie, au moins un code d'identification (ID) également spécifique au véhicule étant stocké dans ledit répondeur sans batterie, ledit répondeur sans batterie étant adapté pour transmettre au dispositif d'interrogation (18) au moins ce code d'identification (ID) en réponse à la réception de l'impulsion d'interrogation.

2. Système à répondeur selon la revendication 1, caractérisé en ce que le code d'identification (ID) stocké dans le répondeur sans batterie (24) est le même que le code d'identification (ID) stocké dans le répondeur (10) alimenté par batterie.

3. Système à répondeur selon la revendication 1 ou 2, caractérisé en ce que le répondeur (10) alimenté par batterie est commandé de sorte qu'il transmette les données comprises dans sa mémoire (50) complètement ou en partie à intervalles de temps réguliers, en ce que le répondeur sans batterie (24) contient une mémoire de données (27) dans laquelle il accepte les données transmises par le répondeur (10) alimenté par batterie, et en ce que le répondeur sans batterie (24) avec le code d'identification (ID) transmet également les données qui y sont stockées.

4. Système à répondeur selon la revendication 1, 2 ou 3, caractérisé en ce qu'une unité de commande (2) est prévue à la station de base. laquelle unité de commande permet seulement les fonctions de commande lorsque le dispositif d'interrogation (18) a, en réponse à la transmission de l'impulsion d'interrogation, reçu le code d'identification (ID) et a déterminé celui-ci comme étant valide.
